# EUROPÄISCHE PATENTSCHRIFT

(11) **EP 2 468 101 B1**
(45) Veröffentlichungstag und Bekanntmachung des Hinweises auf die Patenterteilung: **17.04.2019**
(21) Anmeldenummer: 10401224.0
(22) Anmeldetag: 23.12.2010
(51) Int. Cl.: A21B 3/04, F24C 7/08

(54) **Verfahren zum Betreiben eines Gargerätes und ein Gargerät**
Method for operating a cooking device and a cooking device
Procédé d'utilisation d'un appareil de cuisson et un appareil de cuisson

(43) Veröffentlichungstag der Anmeldung: 27.06.2012
(73) Patentinhaber: Miele & Cie. KG, 33332 Gütersloh (DE)
(72) Erfinder: Metz, Thomas, 32257, Bünde (DE)

(56) Entgegenhaltungen:
- EP-A1- 1 166 694
- EP-A1- 1 847 203
- EP-A2- 1 517 095
- EP-A2- 2 063 183

## Beschreibung

Die vorliegende Erfindung betrifft ein Verfahren zum Betreiben eines Gargeräts, welches wenigstens einen Garraum, wenigstens eine Dampfquelle, wenigstens eine Steuereinrichtung und wenigstens eine Sensoreinrichtung aufweist, wobei die Sensoreinrichtung wenigstens einen Temperaturfühler umfasst, der eine für den Garraum charakteristische Temperatur zu erfassen.

Die vorliegende Erfindung betrifft auch ein Gargerät mit wenigstens einem Garraum, der wenigstens im Wesentlichen über wenigstens eine Dampfquelle beheizbar ist. Zur Steuerung des Garvorgangs sind wenigstens eine Steuereinrichtung und wenigstens eine Sensoreinrichtung vorgesehen. Insbesondere betrifft die Erfindung ein Dampfgargerät, welches wenigstens im Wesentlichen über den Dampf wenigstens einer Dampfquelle beheizbar ist. Dabei können neben einer oder mehreren Dampfquellen auch eine oder mehrere konventionelle Heizquellen vorgesehen sein.

Gargeräte, die Dampf zum Garen der Speisen einsetzen, eignen sich zur schonenden und effizienten Zubereitung von Speisen. Oftmals werden solche Gargeräte als offene Systeme ausgebildet, bei denen der Dampf im Garraum produziert oder dem Garraum zugeführt wird und bei denen überschüssiger Dampf durch eine Austrittsöffnung aus dem Garraum in die Umgebung austreten kann. Solche drucklos arbeitenden Dampfgeräte sind weit verbreitet. Während der Aufheizphase wird bei solchen Gargeräten regelmäßig mit maximaler Dampferzeugerleistung geheizt, um möglichst schnell die gewünschte Gartemperatur zu erreichen. Die exakte Gartemperatur hängt insbesondere von der geodätischen Einsatzhöhe des Gargerätes ab, da die Siedetemperatur von Wasser von dem Luftdruck abhängt.

Wenn die Aufheizphase mit maximaler Dampfleistung bis zur vorgesehenen Gar- bzw. Betriebstemperatur fortgesetzt wird, kann dies bei kleineren und kleinen Beladungen des Garraumes zu einem erheblichen und sichtbaren Dampfüberschuss führen, da auch nach dem Herunterfahren oder Abschalten der Dampferzeugerleistung es aufgrund der Trägheit noch eine gewisse Zeitdauer benötigt, bis die produzierte Dampfmenge entsprechend reduziert wird. Der überschüssige Dampf verlässt über den Dampfauslass des Garraumes den Garraum und schließlich das Gargerät und führt zu einer Anhebung der Feuchte in der Umgebung des Gargerätes, z.B. in der Küche des Benutzers. Ein solcher Dampfaustritt und somit die Anhebung der Feuchtigkeit in der Umgebung des Gargeräts ist unerwünscht und wird von vielen Benutzern als fehlerhaft angesehen, was wiederum zu Reklamationen führt.

Um solche ungünstigen Betriebsbedingungen zu vermeiden, wird deshalb die Dampferzeugerleistung nicht erst bei Erreichen der vorgesehenen Gartemperatur bzw. Betriebstemperatur reduziert, sondern die Dampferzeugerleistung wird schon bei erheblich niedrigeren Temperaturen, z.B. bei 70 Grad °C reduziert, um die Menge des aus dem Gargerät austretenden Dampfes zu reduzieren und möglichst vollständig zu vermeiden. Eine solche Reduktion der Dampferzeugerleistung während der Aufheizphase aber führt zu einem langsameren Aufheizen und somit verlängerten Garprozess, da die benötigte Heizleistung nicht zur Verfügung steht.

Es ist deshalb die Aufgabe der vorliegenden Erfindung, ein Gargerät und ein Verfahren zum Betreiben eines Gargeräts zur Verfügung zu stellen, womit kürzere Aufheiz- und somit Garzeiten erzielbar sind und wobei in der Aufheizphase der Austritt von Dampf aus dem Garraum weitgehend vermieden wird.

Diese Aufgabe wird gelöst durch ein Verfahren zum Betreiben eines Gargeräts mit den Merkmalen des Anspruchs 1 und durch ein Gargerät mit den Merkmalen des Anspruchs 5. Bevorzugte Weiterbildungen der Erfindung sind Gegenstand der jeweiligen Unteransprüche. Weitere Vorteile, Merkmale und Eigenschaften der Erfindung ergeben sich aus dem Ausführungsbeispiel.

Das erfindungsgemäße Verfahren dient zum Betreiben eines Gargeräts, wobei der Garraum wenigstens im Wesentlichen von wenigstens einer Dampfquelle beheizt wird und wobei der Betrieb durch eine Steuereinrichtung gesteuert wird. Mit einer Sensoreinrichtung wird ein Maß für die Beladung des Garraums erfasst, sodass der Garprozess wenigstens teilweise in Abhängigkeit von dem Maß für die Beladung gesteuert werden kann. Dabei umfasst die Sensoreinrichtung wenigstens einen Temperaturfühler, mit dem eine für den Garraum charakteristische Temperatur erfasst wird.

Dabei ist vorgesehen, dass der wenigstens eine Temperaturfühler in dem Bereich der Dampfauslassöffnung die Temperatur von überschüssigem durch die Dampfauslassöffnung aus dem Garraum in die Umgebung austretenden Dampf genauso erfasst wie die Temperatur der Luft, welche von außerhalb des Garraumes angesaugt wird, weil zu wenig Dampf in den Garraum eingebracht wird und der Garraum kondensierende Dampf eine erhebliche Volumenreduktion und damit einen Unterdruck im Garraum verursacht.

Das führt zu einem besseren Ansprechverhalten des Temperaturfühlers, sodass die Steuereinrichtung zu einer schnellen und effizienten Temperatursteuerung und Garprozesssteuerung geeignet ist. Dies bietet erhebliche Vorteile, da durch die beladungsabhängige Steuerung des Garprozesses eine möglichst kurze Garzeit ermöglicht wird, ohne dass übermäßig Dampf aus dem Gargerät austritt. Das erfindungsgemäße Gargerät weist wenigstens einen Garraum auf, der wenigstens im Wesentlichen über wenigstens eine Dampfquelle beheizbar ist. Wenigstens eine Steuereinrichtung und wenigstens eine Sensoreinrichtung sind vorgesehen, um den Garvorgang zu steuern. Die Steuereinrichtung ist dazu eingerichtet, aus den Sensorsignalen der Sensoreinrichtung wenigstens ein Maß für die Beladung des Garraumes abzuleiten und das erfindungsgemäße Verfahren durchzuführen. Damit kann der Garprozess wenigstens teilweise gesteuert werden.

Die Erfindung hat viele Vorteile. Ein erheblicher Vorteil des erfindungsgemäßen Gargeräts besteht darin, dass durch die Sensoreinrichtung ein Maß für die Beladung des Garraumes abgeleitet wird, sodass der Garprozess in Abhängigkeit von der Beladung des Garraumes steuerbar ist. Bei kleinen Beladungen des Garraumes kann die Heizleistung der Dampfquelle früher reduziert werden als bei großen Beladungen.

Das führt dazu, dass am Ende der Aufheizphase nur wenig oder gar kein Dampf aus dem Gargerät austritt, da die Trägheit der Dampfquelle berücksichtigt wird. Bei kleinen Beladungen wird die Dampfquelle vorzugsweise früher in ihrer Leistung reduziert, sodass die nach der Reduktion durch die Trägheit des Systems noch produzierte Dampfmenge nicht zu einem Dampfüberschuss im Garraum führt. Bei großen Beladungen kann die maximale Heizleistung länger beibehalten werden, da genügend Gargut zur Verfügung steht, um die mit dem Dampf eingetragene Wärme aufzunehmen. Möglicherweise wird eine hohe oder die maximale Heizleistung bis praktisch zum Erreichen bis kurz vor dem Erreichen der Betriebstemperatur beibehalten. Aus dem Garraum austretender Dampf tritt dabei praktisch nicht auf, da der Dampf in dem Garraum praktisch direkt kondensiert wird.

In besonders bevorzugten Weiterbildungen der Erfindung umfasst die Sensoreinrichtung wenigstens einen Temperaturfühler, der eine für den Garraum charakteristische Temperatur erfasst. Besonders bevorzugt ist die Steuereinrichtung dazu eingerichtet, aus dem zeitlichen Temperaturverlauf des Temperaturfühlers das Maß oder wenigstens ein Maß für die Beladung des Garraums abzuleiten. Eine solche Ausgestaltung ermöglicht mit einfachen Mitteln eine Bestimmung eines Maßes für die Beladung des Garraumes. Bei gleichbleibender Heizleistung wird bei einer geringeren Beladung die Temperatur steiler mit der Zeit ansteigen als bei einer größeren Beladung, sodass aus der Steigung der den Garraum charakterisierenden Temperatur auf ein Maß für die Beladung des Garraumes zurückgeschlossen werden kann.

Der Temperaturanstieg über der Zeit wird dabei durch die Heizleistung und somit die abgegebene Dampfmenge und auch durch den Garraum und dessen Einbauten beeinflusst. Die Konstruktion und Gestaltung des Garraums und dessen Materialien und die Wärmekapazität der eingesetzten Materialien führen zu einer Gerätekonstante, die bei Einsatz der gleichen Garbehälter von Garprozess zu Garprozess konstant bleiben. Unterschiede im Verlauf der Temperatur werden somit im Wesentlichen durch unterschiedliche Beladungen des Garraums hervorgerufen.

Da ein Temperaturfühler bei solchen Gargeräten regelmäßig im Garraum angeordnet ist, um die vorgesehene Gartemperatur einzustellen, bietet das erfindungsgemäße Gargerät auf einfache Art und Weise die Möglichkeit der beladungsabhängigen Steuerung des Garprozesses.

Vorzugsweise ist die Steuereinrichtung dazu eingerichtet, bei Erreichen einer Schwelltemperatur eine Heizleistung der Dampfquelle zu reduzieren. Möglich ist es beispielsweise auch, dass eine Dampfquelle abgeschaltet oder in ihrer Heizleistung reduziert wird, wenn eine Schwelltemperatur erreicht wird, während eine andere Dampfquelle noch mit maximaler Heizleistung betrieben wird. Insgesamt ist es bevorzugt, dass die in den Garraum eingebrachte Dampfmenge entsprechend gesteuert wird.

Besonders bevorzugt ist die Steuereinrichtung dazu eingerichtet, die Schwelltemperatur in Abhängigkeit von dem Maß für die Beladung des Garraums zu verändern. Das bedeutet, dass bei geringeren Beladungen die Schwelltemperatur niedriger sein kann, ab der die Heizleistung der Dampfquelle oder der Dampfquellen reduziert wird. Bei größeren Beladungen kann die Heizleistung der Dampfquelle oder der Dampfquellen erst bei höheren Schwelltemperaturen reduziert werden.

In allen Ausgestaltungen sind in dem Garraum wenigstens eine Dampfeinlassöffnung und wenigstens eine Dampfauslassöffnung vorgesehen. Besonders bevorzugt sind wenigstens zwei getrennt steuerbare Dampfeinlassöffnungen vorgesehen. Dabei ist es möglich, dass die getrennt steuerbaren Dampfeinlassöffnungen jeweils mit Dampf unterschiedlicher Dampfquellen beaufschlagbar sind, sodass beispielsweise bei Erreichen der Schwelltemperatur eine Dampfquelle abgeschaltet wird, während eine andere Dampfquelle weiterhin Dampf produziert. Dabei ist es möglich, dass die Heizleistung der einen oder beider oder aller Dampfquellen in mehreren Stufen veränderbar ist.

Besonders bevorzugt ist wenigstens ein Temperaturfühler in dem Bereich der Dampfauslassöffnung und insbesondere an der Dampfauslassöffnung angeordnet. Wird ein Temperaturfühler an einer solchen Position angeordnet, so erfasst der Temperaturfühler einerseits eine charakteristische Temperatur des Garraumes, wird aber andererseits im besonderen Maße mit Veränderungen in dem Garraum beaufschlagt. Wird zu viel Dampf in den Garraum eingebracht, sodass ein Dampfüberschuss in dem Garraum vorherrscht, so tritt der überschüssige Dampf durch die Dampfauslassöffnung aus dem Garraum in die Umgebung aus. Da der Temperaturfühler an der Dampfauslassöffnung positioniert ist, wird somit der Temperaturfühler direkt mit der Dampftemperatur beaufschlagt, sodass für ein möglichst kurzfristiges Ansprechen des Temperaturfühlers gesorgt wird.

Wird andererseits zu wenig Dampf in den Garraum eingebracht, führt der im Garraum kondensierende Dampf durch die erhebliche Volumenreduktion zu einem Unterdruck im Garraum, sodass durch die Dampfauslassöffnung Luft von außerhalb des Garraumes angesaugt wird. Diese Luft aus der Umgebung weist eine erheblich geringere Temperatur auf, als die Temperatur der im Garraum vorliegenden Atmosphäre, sodass der Temperaturfühler wiederum mit einer erheblichen Temperaturdifferenz beaufschlagt wird. Das führt zu einem besseren Ansprechverhalten des Temperaturfühlers, sodass die Steuereinrichtung zu einer schnellen und effizienten Temperatursteuerung und Garprozesssteuerung geeignet ist.

Das erfindungsgemäße Verfahren dient zum Betreiben eines Gargeräts, wobei der Garraum wenigstens im Wesentlichen von wenigstens einer Dampfquelle beheizt wird und wobei der Betrieb durch eine Steuereinrichtung gesteuert wird. Mit einer Sensoreinrichtung wird ein Maß für die Beladung des Garraums erfasst, sodass der Garprozess wenigstens teilweise in Abhängigkeit von dem Maß für die Beladung gesteuert werden kann.

Auch das erfindungsgemäße Verfahren bietet erhebliche Vorteile, da durch die beladungsabhängige Steuerung des Garprozesses eine möglichst kurze Garzeit ermöglicht wird, ohne dass übermäßig Dampf aus dem Gargerät austritt.

Vorzugsweise umfasst die Sensoreinrichtung wenigstens einen Temperaturfühler, mit dem eine für den Garraum charakteristische Temperatur erfasst wird. Dabei wird aus dem Temperaturverlauf über der Zeit das Maß für die Beladung abgeleitet.

Möglich ist es beispielsweise, die zwischen einer ersten niedrigeren und einer zweiten höheren Temperatur benötigte Zeitdauer zu erfassen und aus dieser Zeitdauer das Maß für die Beladung abzuleiten. Bei einer geringeren Beladungsmenge wird die benötigte Zeitdauer zum Aufheizen geringer sein als bei einer höheren Beladungsmenge. Möglich ist es auch, ein Maß für die Beladung aus der Steigerung des Temperaturverlaufes bei einer oder mehreren vordefinierten oder vorgebbaren oder einstellbaren Temperaturen abzuleiten. Möglich ist es auch, die innerhalb einer einstellbaren oder vorgegebenen oder vorgebbaren Zeitdauer erfolgte Temperaturerhöhung des Garraums zu verwenden, um ein Maß für die Beladung des Garraums abzuleiten. Vorzugsweise wird aus dem Temperaturverlauf über der Zeit das Maß für die Beladung abgeleitet.

Insbesondere ist es möglich und bevorzugt, eine Wärmekapazität des aufgenommenen Gargutes abzuleiten. Bei bekannten Speisen und Zusammensetzungen und einem bekannten Gargutbehälter kann auf die aufgenommene Menge des Gargutes zurückgeschlossen werden.

In allen Fällen ist es bevorzugt, dass die Heizleistung der Dampfquelle oder wenigstens einer Dampfquelle in Abhängigkeit von der charakteristischen Temperatur gesteuert wird. Dabei ist es besonders bevorzugt, dass die Heizleistung der Dampfquelle wenigstens teilweise auch in Abhängigkeit von dem Maß für die Beladung gesteuert wird.

Insgesamt ist es besonders bevorzugt, dass beim Aufheizen die Heizleistung der Dampfquelle bei einer geringeren Beladung bei einer geringeren Temperatur reduziert wird als bei einer größeren Beladung. Ebenfalls ist es möglich, dass beim Aufheizen die Heizleistung der Dampfquelle bei einer geringeren Beladung stärker reduziert wird als bei einer größeren Beladung. Dabei kann die Schwelltemperatur bei der die Heizleistung reduziert wird, in beiden Fällen gleich gewählt werden.

Weitere Vorteile und Merkmale der vorliegenden Erfindung ergeben sich aus dem Ausführungsbeispiel, welches im Folgenden mit Bezug auf die beiliegenden Figuren erläutert wird.

In den Figuren zeigen:
- Figur 1: eine schematische Voransicht eines erfindungsgemäßen Gargerätes;
- Figur 2: eine vergrößerte schematische Vorderansicht der gemeinsamen Baueinheit des Gargeräts gemäß Figur 1;
- Figur 3: eine stark schematische Querschnittsansicht des Gargeräts gemäß Figur 1;
- Figur 4: eine geschnittene Draufsicht auf das Gargerät gemäß Figur 1;
- Figur 5: den Temperaturverlauf über der Zeit für zwei unterschiedliche Beladungen des Garraums; und
- Figur 6: den zeitlichen Temperatur- und Heizverlauf für die beiden unterschiedlichen Beladungsmengen gemäß Figur 1.

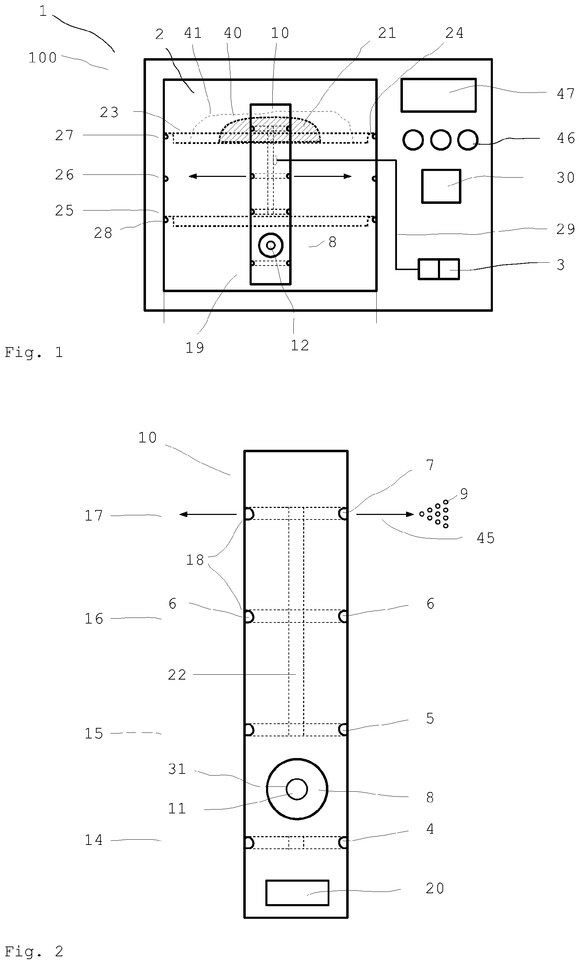

Mit Bezug auf die beiliegenden Figuren 1 bis 6 wird im Folgenden ein Ausführungsbeispiel eines erfindungsgemäßen Gargeräts 1 beschrieben, welches hier als Dampfgargerät 100 ausgeführt ist und welches sowohl als Einbaugerät als auch als alleinstehendes Gargerät ausgebildet sein kann.

In Figur 1 ist das Gargerät 1 in einer stark schematischen und vereinfachten Darstellung abgebildet. Das Gargerät 1 weist einen Garraum 2 auf, der wenigstens teilweise über Dampf wenigstens einer Dampfquelle 3 beheizbar ist. Dabei kann die Dampfquelle 3, wie in Figur 1 angedeutet, über mehrere Heizquellen verfügen, die nach Bedarf einzeln oder auch gesamt ansteuerbar sind.

Die Dampfquelle 3 leitet den erzeugten Dampf 9 (vgl. Figur 2) über Dampfeinlassöffnungen 4 bis 7 in den Garraum 2 ein. Eine zentrale Dampfauslassöffnung 8 ist mit der Umgebung 50 des Gargerätes 1 verbunden, sodass das Gargerät 1 bzw. das Dampfgargerät 100 als drucklos arbeitendes System ausgeführt ist. Durch die Auslassöffnung 8 kann überschüssiger Dampf 9 aus dem Inneren des Garraums 2 nach außen abgeführt werden oder aber es kann Luft aus der Umgebung 50 angesaugt werden, wenn im Inneren des Garraums 2 ein Unterdruck vorherrscht, wenn dort beispielsweise vorhandener Dampf 9 kondensiert und nicht genug Dampf 9 durch die Dampfquelle 3 nachgeliefert wird. Es können auch mehrere Dampfauslassöffnungen 8 vorgesehen sein.

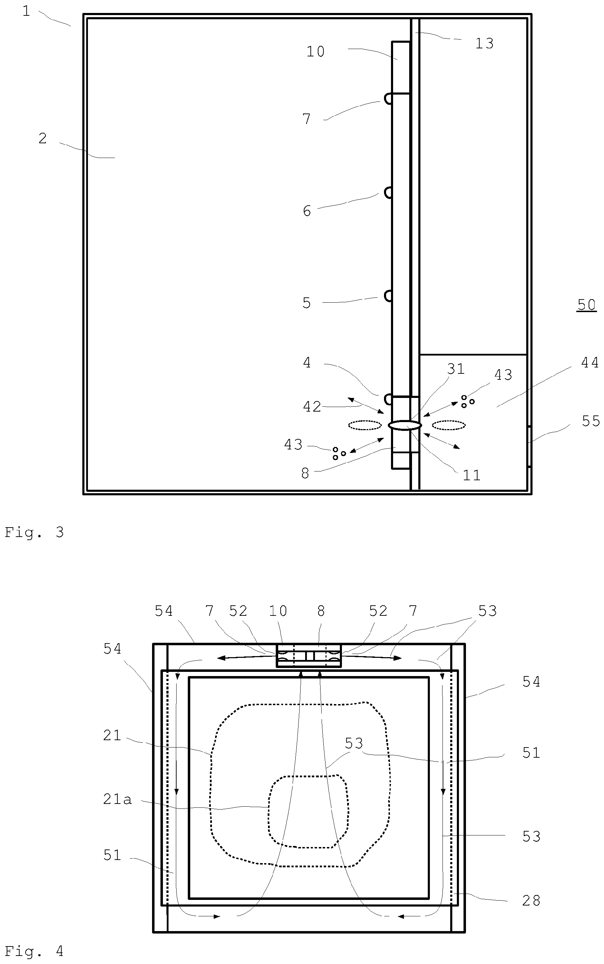

Figur 2 zeigt die gemeinsame Baueinheit 10 in vergrößerter Darstellung, die an der Rückwand 13 (vgl. Fig. 3) des Garraumes 2 austauschbar angeordnet ist. An der gemeinsamen Baueinheit 10 sind hier die insgesamt acht Dampfeinlassöffnungen 4 bis 7 vorgesehen, die auf vier Ebenen 14 bis 17 jeweils paarweise angeordnet sind. Jeweils zwei Dampfeinlassöffnungen 4, 5, 6 und 7 sind paarweise an der Baueinheit 10 vorgesehen und sind so ausgebildet, dass der aus dem Dampfeinlassöffnungen 4 bis 7 austretende Dampf 9 in etwa entgegengesetzte Richtungen gelenkt wird, wie die eingezeichneten Strahlrichtungen 45 an den Dampfeinlassöffnungen 7 zeigen. Jeweils zwei Dampfeinlassöffnungen 4 bis 7 sind auf jeder Ebene 14 bis 17 vorgesehen.

Die Dampfauslassöffnung 8 ist hier zentral zwischen der untersten Ebene 14 und der zweituntersten Ebene 15 und somit zwischen den Dampfeinlassöffnungen 4 und 5 angeordnet.

Zentrisch ist innerhalb der Dampfauslassöffnung 8 eine Sensoreinrichtung 31 angeordnet, die einen Temperaturfühler 11 umfasst. Durch die Anordnung des Temperaturfühlers 11 innerhalb der Dampfauslassöffnung 8 wird sichergestellt, dass durch die Dampfauslassöffnung 8 strömendes Gas den Temperaturfühler 11 mit der jeweils vorherrschenden Temperatur wenigstens teilweise beaufschlagt, sodass durch Gasaustritt oder Gaseintritt hervorgerufene Temperaturänderungen schnell und sicher durch den Temperaturfühler 11 erfasst werden können.

Wie der Darstellung nach Figur 1 entnommen werden kann, sind zwischen den Ebenen 14, 15, 16 und 17 drei Garebenen 25, 26 und 27 vorgesehen. Dabei ist in Figur 1 an den Garebenen 25 und 27 jeweils ein als Garblech ausgeführter Garbehälter 23 angeordnet. Der Garbehälter 23 ist an den Garebenen 25 und 27 gestrichelt eingezeichnet. Zusätzlich kann auch an der Garebene 26 ein entsprechender Garbehälter 23 angeordnet werden.

Die Anordnung der Garebenen 25, 26 und 27 ist derart, dass jede Garebene 25 bis 27 jeweils von oben und unten mit Dampf 9 der einen Dampfquelle 3 oder mehrerer Dampfquellen 3 beaufschlagbar ist. Dabei wird die unterste Garebene 25 durch Dampf aus den Dampfeinlassöffnungen 4 und 5 beaufschlagt und die Garebene 26 wird von unten durch Dampf 9 aus den Dampfeinlassöffnungen 5 und von oben durch Dampf 9 aus den Dampfeinlassöffnungen 6 beaufschlagt. Die Garebene 27 wird wiederum von oben durch Dampf 9 aus den Dampfeinlassöffnungen 7 und von unten durch Dampf 9 aus den Dampfeinlassöffnungen 6 beaufschlagt.

Jeder Garbehälter 23 ist hier etwa wannenförmig ausgebildet und weist einen Aufnahmerand 24 auf, der auf Haltern 28 des Garraumes 2 aufliegt. Die Halter 28 definieren die Garebenen und stützen die Garbehälter 23 nach unten ab. Durch den Aufnahmerand 24 des Garbehälters 23 und die Anordnung der Dampfeinlassöffnungen 4 bis 7 wird es erreicht, dass in den Garraum 2 eintretender Dampf 9 durch die zwischen dem Garbehälter 23 und den Wandungen 54 des Garraums 2 gebildeten Führungskanäle bzw. Dampfkanäle 51 geleitet wird. Der hinten an der Rückwand 13 aus der Baueinheit 10 austretende Dampf wird an der Rückwand 13 entlang geleitet und entlang der Seitenwände bis zum vorderen Ende des Garraumes 2 geführt, wo er vorne um den Garbehälter 23 herumtritt und schließlich in erheblichem Maße von vorn auf das Gargut 21 geleitet wird. Zum Schluss erreicht die Strömung die Dampfauslassöffnung 8, sodass sichergestellt wird, dass das kälteste Gas aus dem Garraum 2 abgeleitet wird.

Auf der Garebene 27 sind schematisch zwei unterschiedliche Beladungen 40 und 41 mit einer zu garenden Speise bzw. einem Gargut 21 dargestellt.

Das in Figur 1 dargestellte Gargerät 1 ist mit einer Steuereinrichtung 30, mit Bedienknöpfen 46 und einer Anzeige 47 ausgerüstet, um den Betriebszustand und/oder das Geräteprogramm und weitere Informationen auszugeben. Die Dampfquelle 3 bzw. die Dampfquellen 3 sind über eine oder mehrere Dampfleitungen 29 mit den jeweiligen Dampfeinlassöffnungen 4 bis 7 verbunden.

Die einzelnen Dampfeinlassöffnungen 4 bis 7 sind jeweils als Dampfdüse 18 ausgebildet, um die Strömungsgeschwindigkeit des aus den Dampfeinlassöffnungen 4 bis 7 ausgegebenen Dampfs 9 zu erhöhen und damit die Durchmischung mit der Garraumatmosphäre zu verbessern.

Die Dampfeinlassöffnungen 5, 6 und 7 sind über eine gemeinsame Dampfführung 22 miteinander verbunden. Die Dampfeinlassöffnungen 4 sind separat ansteuerbar. Möglich ist es auch, dass die Dampfeinlassöffnungen 5, 6 und 7 jeweils separat ansteuerbar sind.

Zum Beginn eines Garprozesses werden alle Einlassöffnungen 4 bis 7 mit maximal vorgesehener Dampfleistung beaufschlagt. Im weiteren Prozess wird die zugeführte Dampfleistung reduziert. Schließlich wird nur durch die unteren Dampfeinlassöffnungen 4 im unteren Bereich 19 Dampf in den Garraum 2 eingeleitet. Im unteren Bereich 19 ist auch die Dampfauslassöffnung 8 vorgesehen.

Wenn nur durch die Dampfeinlassöffnungen 4 im unteren Bereich 19 des Garraums 2 Dampf 9 eingeleitet wird, so wird dieser heiße Dampf 9 automatisch in die oberen Bereiche des Garraums 2 geleitet, da heißer Dampf 9 leichter ist. Die im unteren Bereich 19 vorgesehene Dampfauslassöffnung 8 wiederum führt im Wesentlichen die kühlste im Garraum 2 vorhandene Atmosphäre nach außen ab.

Zur Beleuchtung des Garraums 2 und/oder der Baueinheit 10 kann eine Leuchtquelle 20 in dem Garraum 2 und insbesondere in der Baueinheit 10 integriert sein.

Figur 3 zeigt einen stark schematischen Querschnitt durch das Gargerät 1 nach Figur 1. Deutlich zu erkennen ist die an der Rückwand 13 des Garraums 2 angeordnete Baueinheit 10.

Die Austrittsöffnungen der seitlich ausstrahlenden Dampfeinlassöffnungen 4 bis 7 sind in der Darstellung gemäß Figur 3 gut zu erkennen.

Im unteren Bereich 19 des Garraums 2 ist die Dampfauslassöffnung 8 angeordnet, so wie es schon den Figuren 1 und 2 zu entnehmen war. Der Temperaturfühler 11 ist hier zentrisch in der Dampfauslassöffnung 8 angeordnet.

Wie es in Figur 3 gestrichelt dargestellt ist, kann der Temperaturfühler 11 auch (vollständig) innerhalb des Garraums 2 oder (vollständig) außerhalb des Garraums 2 in beispielsweise dem Zwischenraum 44 angeordnet werden. Der Temperaturfühler 11 ist dabei innerhalb des Strömungsweges 42 des Gasstroms 43 durch die Dampfauslassöffnung 8 stromabwärts angeordnet. Dadurch, dass der Temperaturfühler 11 innerhalb des Strömungsweges 42 angeordnet ist, wird der Temperaturfühler 11 in jedem Fall mit dem durch die Dampfauslassöffnung 8 durchtretenden Gasstrom 43 beaufschlagt.

Wenn dieser Gasstrom 43 beispielsweise bei Austritt von Dampfüberschuss eine erhöhte Temperatur oder bei Lufteintritt von außen eine niedrigere Temperatur als die Garraumtemperatur aufweist, so registriert der Temperaturfühler 11 solche Temperaturänderungen direkt. Dadurch wird eine erheblich feinere Steuerung der Heizleistung und somit der Garraumtemperatur ermöglicht. Das "Atmen" des Garraumes 2 wird weitestgehend vermieden. In Versuchen hat sich herausgestellt, dass zeitliche und örtliche Temperaturunterschiede innerhalb des Garraumes 2 weitestgehend vermieden und gegebenenfalls sogar nicht mehr erfasst werden. Optisch unschöne Verfärbungen auf Lebensmitteln werden vermieden.

Zum Austritt und zum Gasaustausch mit der Umgebung 50 sind Öffnungen 55 in dem Zwischenraum 44 vorgesehen.

In Figur 4 ist ein stark schematischer Querschnitt durch den Garraum 2 eines Gargeräts 1 bzw. Dampfgargeräts 100 etwa in Höhe der Dampfauslassöffnungen 7 kurz oberhalb der Garebene 27 aus Figur 1 dargestellt.

Die Dampfauslassöffnungen 7 sind an der Baueinheit 10 am rückwärtigen Ende des Garraumes 2 angeordnet und weisen, wie hier im Querschnitt erkennbar, Verengungen 52 am Austrittsquerschnitt auf, sodass die Dampfströmung beim Austritt aus den Dampfeinlassöffnungen 7 beschleunigt wird. Dabei wirken die Dampfeinlassöffnungen 7 als Dampfdüsen 18. Dadurch wird eine besonders intensive Vermischung des durch die Dampfeinlassöffnungen 7 in den Garraum 2 eintretenden Dampfes 9 mit der dort vorherrschenden Atmosphäre erzielt. Auch die anderen Dampfeinlassöffnungen 4 bis 6 sind hier entsprechend ausgebildet.

Die Dampfströmung 53, die aus dem Dampfeinlassöffnungen 7 in den Garraum 2 eintritt, wird etwa tangential, d.h. etwa parallel zur Rückwand 13 in den Garraum 2 eingeblasen, wobei ein leichter Winkel zur Rückwand 13 vorliegen kann. Die Rückwand bildet hier eine Wandung 54, an der der Dampfstrom entlang geführt wird. Zusammen mit dem Garbehälter 23 bilden die Rückwand 13 und die seitlichen Wandungen 54 Dampfkanäle 51, durch die der eintretende Dampf 9 geleitet wird. Insgesamt ergibt sich in starker Näherung ein Strömungsverhalten, wie es durch die mit Pfeilen gekennzeichnete Dampfströmung 53 eingezeichnet ist. Die Dampfströmung 53 nimmt dabei den Weg an der hinteren Rückwand entlang bis zur Seitenwand, von dort bis zum vorderen Ende des Garraumes 2, wird dort wiederum umgelenkt und gelangt über die Garebene 27 wieder zurück zur Rückwand 13.

Durch diese Anordnung wird für eine homogene Verteilung des Dampfes 9 innerhalb des Garraumes 2 gesorgt, insbesondere da der Dampf 9 insbesondere zu Beginn des Garvorganges nicht nur über die oberen Dampfeinlassöffnungen 7, sondern über alle Dampfeinlassöffnungen 4, 5, 6 und 7 in den Garraum 2 eingeleitet wird.

In Figur 4 sind zwei unterschiedliche Beladungen 40 und 41 schematisch mit auf dem Garbehälter 23 eingezeichnet.

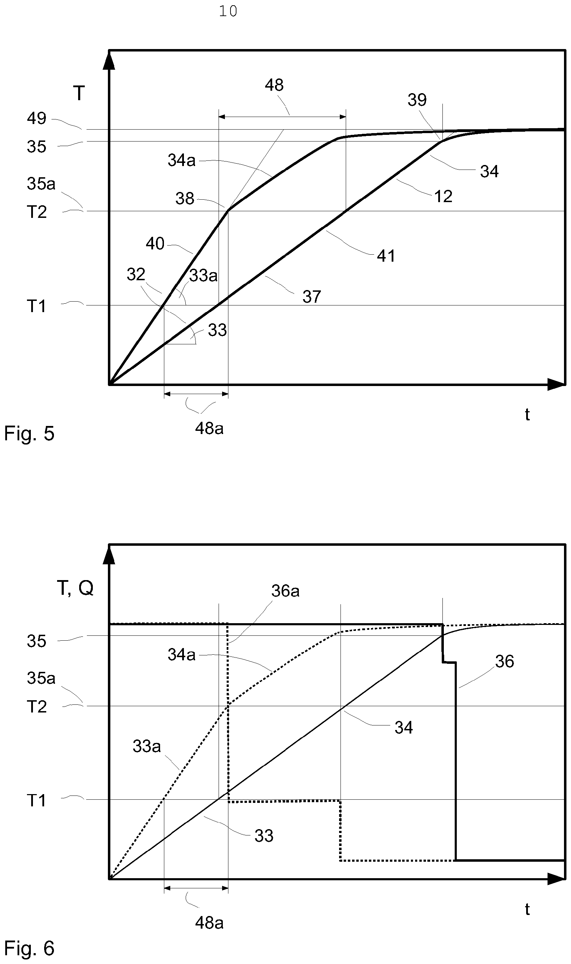

Figur 5 zeigt den Temperaturverlauf zweier unterschiedlicher Beladungen 40 und 41 über der Zeit nach dem Beginn des Garvorganges. Dabei wird in beiden Fällen zunächst mit maximal vorgesehener Dampfleistung beheizt. Es ergibt sich zunächst in genäherter Darstellung ein linearer Anstieg der Temperatur mit der Zeit, wobei der Anstieg bei der geringeren Beladung 40 steiler als bei der höheren Beladung 41 ist. Das wird durch die höhere Wärmekapazität der höheren Beladung 41 verursacht, da eine größere Wärmekapazität aufgewärmt werden muss.

Es hat sich als vorteilhaft herausgestellt, dass der Temperaturverlauf zwischen einer ersten Temperatur T1 und einer zweiten Temperatur T2 für die Steuerung des Aufheizvorganges verwendet wird. Eine geeignete Temperatur T1 ist beispielsweise 40 Grad °C und eine geeignete Temperatur T2 kann beispielsweise 70 Grad °C sein. Je nach herrschenden Außentemperaturen können auch höhere Temperaturen T1 wie z.B. 50 oder 55 Grad °C gewählt werden. Auch eine höhere Temperatur T2, wie z.B. 75 oder 80 Grad °C ist möglich.

Die Zeitdauer 48 bzw. 48a, die genötigt wird, bis die charakteristische Temperatur 12 in dem Garraum von der Temperatur T1 auf die Temperatur T2 gestiegen ist, kann dazu verwendet werden, ein Maß 33 bzw. 33a für die Beladung in dem Garraum 2 zu bestimmen. Gegebenenfalls kann die benötigte Zeit auch als direktes Maß für die Beladung verwendet werden. Je größer die Zeitspanne ist, desto größer ist die Beladung im Garraum 2. So ergibt sich in anschaulicher Weise aus der Darstellung gemäß Figur 5 schon, dass die zur Zeitdauer 48a gehörende Beladung 33a geringer ist als die zur Zeitdauer 48 gehörende Beladung 33. Neben oder anstelle der Zeitdauer 48, die benötigt wird, um den Garraum 2 von einer Temperatur T1 auf eine Temperatur T2 zu erhitzen, kann auch die örtliche Steigung bei einer oder mehreren Temperaturen verwendet werden, um ein Maß 33 bzw. 33a für die Beladung zu erhalten.

Der zeitliche Temperaturverlauf 34 bzw. 34a hängt von der Beladung 40 bzw. 41 und gegebenenfalls unterschiedlichen Speisen 21 bzw. 21a ab.

Nach Erreichung einer zweiten Temperatur T2 oder bei Erreichen einer Temperatur 38, die auch als Schwelltemperatur bezeichnet werden kann, kann in Fällen einer relativ geringen Beladung 40 die Heizleistung und somit die zugeführte Dampfmenge reduziert werden, um einen übermäßigen Austritt von Dampf aus dem Gargerät 1 zu vermeiden. Die reduzierte Heizleistung zeigt sich direkt in der geringeren Steigung des zeitlichen Temperaturverlaufs 34a nach der zweiten Temperatur T2 bzw. der Temperatur 38. Im weiteren Verlauf kann nach Erreichen einer Schwelltemperatur 35 die Heizleistung weiter reduziert werden, sodass die vorgesehene Gartemperatur erreicht wird, ohne ein übermäßiges Maß an Dampf aus dem Gargerät 2 abzuführen. In bevorzugten Fällen wird die Heizleistung erst bei Erreichen einer vorgegeben oder einstellbaren Schwelltemperatur reduziert, die z.B. 80 °C betragen kann.

In allen Fällen kann bei einer höheren Beladung 41 mit maximaler Heizleistung bis zum Erreichen der Schwelltemperatur 35 oder einer höheren Temperatur 39 weiter geheizt werden, da bei hohen Beladungen 41 das im Garraum 2 vorhandene Gargut 21 die durch den Dampf 9 eingebrachte Heizleistung absorbieren kann, sodass kein Austritt von Dampf 9 aus dem Garraum 2 zu befürchten ist, bis die vorgesehene Gartemperatur 49 etwa erreicht wird. Bei einer geringeren Beladung 40 wird vorzugsweise die Heizleistung schon bei einer geringeren Temperatur 38 verringert, während bei einer höheren Beladung 41 die Heizleistung erst bei einer höheren Temperatur 39 reduziert wird.

Die zeitlichen Temperaturverläufe 34 bzw. 34a ergeben sich aus den Sensorsignalen 32 der Sensoreinrichtung 31 bzw. des Temperaturfühlers 11. Der zeitliche Temperaturverlauf 34 bzw. 34a stellt ein direktes Maß für die jeweilige Wärmekapazität 37 des Inhalts des Garraumes 2 dar.

In Figur 6 ist für das Beispiel aus Figur 5 neben den zeitlichen Temperaturverläufen 34 und 34a auch noch die entsprechende Heizleistung 36 bzw. 36a aufgetragen.

Zu Beginn des Garvorgangs wird in beiden Fällen mit maximaler Heizleistung gearbeitet, um soviel Dampf 9 wie möglich in den Garraum 2 einzubringen. Dementsprechend steigen die auch in Figur 6 abgebildeten Temperaturen entsprechend an. Bei einer geringen Beladung 40 kann bei Erreichen der Temperaturschwelle T2 die Heizleistung erheblich reduziert werden, bis bei Erreichen der Schwelltemperatur 35 die Heizleistung nochmals reduziert wird, um den Garprozess mit verminderter Leistung fortzusetzen. Bei einer geringen Beladung 40 kann folglich die Temperatur T2 als erste Schwelltemperatur 35a eingesetzt werden, während eine zweite Schwelltemperatur noch nahe der vorgesehenen Gartemperatur 49 vorgesehen sein kann.

Bei einer hohen Beladung 41 wird zunächst zu Beginn des Garvorgangs auch mit maximaler Heizleistung geheizt, um möglichst viel Dampf 9 in den Garraum 2 einzubringen. Durch die Steigung des zeitlichen Temperaturverlaufs 34 bzw. das daraus bestimmte Maß 33 für die Beladung ergibt sich, dass die maximale Heizleistung bis zum Erreichen einer weitaus höheren Schwelltemperatur 35 fortgesetzt werden kann, die nahe an der vorgesehenen Gartemperatur liegen kann und beispielsweise nur ein, zwei, drei oder vier Grad C unterhalb der Siedetemperatur liegen kann. Erst bei Erreichen der Schwelltemperatur 35 wird die Heizleistung etwas gedrosselt und schließlich bei nahezu Erreichen der Gartemperatur wieder stark abgesenkt, sodass beispielsweise mit der gleichen Heizleistung der Garprozess fortgesetzt wird wie es bei einer geringen Beladung 40 der Fall ist.

In allen Fällen ist es möglich, dass die Heizleistung mehrstufig oder kontinuierlich angepasst wird. Es ist nicht nötig, dass die Heizleistung nur in ein, zwei oder drei Stufen angepasst wird.

Möglich ist auch eine kontinuierliche oder quasi-kontinuierliche Anpassung der Heizleistung. Es ist auch möglich, zwei, drei, vier oder fünf oder mehr Schwelltemperaturen vorzusehen, bei denen die Heizleistung entsprechend reduziert oder erhöht wird.

Insgesamt wird durch das erfindungsgemäße Gargerät ein Gargerät 1 zur Verfügung gestellt, welches einfacher zu montieren ist, da die Baueinheit 10 idealerweise mit allen die Prozesssteuerung betreffenden Elementen versehen ist und somit als kompakte vormontagefähige Baueinheit ausgebildet sein kann. Dadurch lässt sich die Fertigung und Montage vereinfachen. Außerdem erhält der Kunde den Vorteil, dass das Gerät einfacher zu reinigen ist. Gegebenenfalls kann noch ein nicht näher dargestelltes Beleuchtungselement in die Baueinheit 10 integriert werden.

Dadurch, dass mehrere Dampfeinlassöffnungen 4 bis 7 auf mehreren Ebenen vorgesehen sind, kann eine homogene Dampfverteilung innerhalb des Garraumes 2 gewährleistet werden. Durch die seitliche Ausströmung des Dampfes 9 an der Rückwand 13 des Garraumes 2 wird eine besonders homogene Verteilung erzielt. Denkbar ist zudem, dass die Dampfeinlassöffnungen 4 bis 7 auch an den anderen Wandungen des Garraums 2 platziert werden können, um die gleichen Effekte zu erzielen. Örtliche und zeitliche Temperaturunterschiede werden minimiert. Insbesondere kann ein gleichmäßiges Garen des eingebrachten Garguts 21 erreicht werden.

Gleichzeitig wird ein kostengünstiges Gargerät 1 zur Verfügung gestellt, welches auch höchsten Ansprüchen genügt. Durch die Ausgestaltung der Dampfeinlassöffnungen 4 bis 7 als Düse 18 wird die Verteilung des Dampfes nochmals verstärkt.

Die unterschiedlich steuerbaren Dampfeinlassöffnungen 4 bis 7 an den verschiedenen Ebenen ermöglichen eine flexiblere Steuerung der Dampfzufuhr, die eine hohe Dampferzeugerleistung ermöglicht und trotz der vielen Dampfeinlassöffnungen 4-7 eine ausreichende Durchmischung bewirkt.

Die Dampfauslassöffnungen 8 im unteren Bereich des Garraumes 2 führen dazu, dass der jeweils kühlste Bereich der Garraumatmosphäre aus dem Garraum 2 abgeleitet wird. Die relativ hohen Einströmgeschwindigkeiten des Dampfes 9 sorgen aufgrund der Massenträgheit der Atmosphäre auch nach dem Einströmen für eine dauerhafte Bewegung innerhalb des Garraumes 2, was eine Entmischung verhindert. Dadurch, dass der eingeleitete Dampf wärmer und leichter ist, steigt dieser nach oben, während die schwerere und kältere Luft nach unten fällt. Dadurch wird eine homogenere Temperaturverteilung erreicht, sodass ungleichmäßige oder schlechte Garergebnisse vermieden werden können.

In der Aufheizphase wird in allen Fällen vorzugsweise mit maximal vorgesehener Dampfleistung beheizt, um die Aufheizphase möglich kurz zu halten.

Durch die Bestimmung eines Maßes 33 bzw. 33a für die Beladung des Garraumes 2 können die Aufheizzeiten sowohl bei großen als auch bei kleinen Beladungen kurz gehalten werden, ohne dass eine erhebliche Menge an Dampf aus dem Gerät 1 austritt. Insbesondere wird die Leistung in allen Fällen beispielsweise erst reduziert, wenn die Raumtemperatur größer 80 Grad C beträgt. Ein schnelles Durchschreiten des Temperaturbereiches zwischen 60 und 80 Grad reduziert den enzymatischen Abbau von Chlorophyll und reduziert damit die Gefahr einer unschönen Verfärbung des Lebensmittels.

Die Anordnung des Temperaturfühlers 11 an dem Dampfauslass 8 des Garraumes 2 ermöglicht eine deutliche bessere Regelung, sodass ein "Atmen" des Garraumes 2 erheblich reduziert und praktisch ganz vermieden werden kann. Insbesondere in Verbindung mit einer verbesserten Steuerung der Heizleistung kann ein besseres Garergebnis gewährleistet werden.

Der an der Dampfauslassöffnung 8 positionierte Temperaturfühler 11 befindet sich in dem durch die Dampfauslassöffnung 8 durchtretenden Gasstrom 43 und detektiert so bei einem Dampfüberschuss den heißen austretenden Dampf und bei einem Dampfmangel, der zu einem Unterdruck im Garraum 2 führt, die kalte eintretende Luft, sodass sehr frühzeitig entsprechend entgegengesteuert werden kann. Durch eine feinfühlige Anpassung der Heizleistung an die aktuellen Gegebenheiten wird im dargestellten Ausführungsbeispiel erreicht, dass nach Erreichen der vorgesehenen Gartemperatur praktisch kein Temperaturunterschied mehr auftritt. Gleichzeitig wird dadurch der Energieverbrauch verringert, da aus dem Garraum 2 austretender Dampf energetisch hochwertig ist und durch eine relativ große Wärmemenge ersetzt werden muss, was hier weitgehend vermieden wird.

Insgesamt wird ein kostengünstiges Gargerät 1 zur Verfügung gestellt, welches bessere Garergebnisse bei einem geringeren Energieverbrauch ermöglicht.

### Bezugszeichenliste

- 1: Gargerät
- 2: Garraum
- 3: Dampfquelle
- 4: Dampfeinlassöffnung
- 5: Dampfeinlassöffnung
- 6: Dampfeinlassöffnung
- 7: Dampfeinlassöffnung
- 8: Dampfauslassöffnung
- 9: Dampf
- 10: Baueinheit
- 11: Temperaturfühler
- 12: charakteristische Temperatur
- 13: Rückwand
- 14: Ebene
- 15: Ebene
- 16: Ebene
- 17: Ebene
- 18: Dampfdüse
- 19: unterer Bereich
- 20: Leuchtquelle
- 21: Speise, Gargut
- 21a: Speise, Gargut
- 22: Dampfführung
- 23: Garbehälter, Garblech
- 24: Aufnahmerand
- 25: Garebene
- 26: Garebene
- 27: Garebene
- 28: Halter
- 29: Dampfleitung
- 30: Steuereinrichtung
- 31: Sensoreinrichtung
- 32: Sensorsignal
- 33: Maß für die Beladung
- 33a: Maß für die Beladung
- 34: zeitlicher Temperaturverlauf
- 34a: zeitlicher Temperaturverlauf
- 35: Schwelltemperatur
- 35a: Schwelltemperatur
- 36: Heizleistung
- 36a: Heizleistung
- 37: Wärmekapazität
- 38: geringere Temperatur
- 39: höhere Temperatur
- 40: geringere Beladung
- 41: höhere Beladung
- 42: Strömungsweg
- 43: Gasstrom
- 44: Zwischenraum
- 45: Strahlrichtung
- 46: Bedienknopf
- 47: Anzeige
- 48: Zeitdauer
- 48a: Zeitdauer
- 49: Gartemperatur
- 50: Umgebung
- 51: Dampfkanal
- 52: Verengung
- 53: Dampfströmung
- 54: Wandung
- 55: Öffnung
- 100: Dampfgargerät
- T1: Temperatur
- T2: Temperatur

## Patentansprüche

1. Verfahren zum Betreiben eines Gargeräts (1), welches wenigstens einen Garraum (2), wenigstens eine Dampfquelle (3), wenigstens eine Steuereinrichtung (30) und wenigstens eine Sensoreinrichtung (31) aufweist, wobei die Sensoreinrichtung (31) wenigstens einen Temperaturfühler (11) umfasst, der eine für den Garraum (2) charakteristische Temperatur (12) erfasst,
wobei der Garraum (2) im Wesentlichen mit einer Dampfquelle (3) beheizt wird und welche mit einer Steuereinrichtung (30) gesteuert wird,
wobei der Temperaturfühler (11) innerhalb des Garraums (2) oder außerhalb des Garraums (2) angeordnet ist, und dabei innerhalb des Strömungsweges (42) des Gasstroms (43) durch die Dampfauslassöffnung (8) stromabwärts angeordnet ist, wobei mit der Sensoreinrichtung (31) das Maß (33) für die Beladung des Garraumes (2) erfasst wird, in dem aus dem zeitlichen Temperaturverlauf (34) des Temperaturfühlers (11) das Maß (33) für die Beladung des Garraumes (2) abgeleitet wird,
und mit dem Temperaturfühler (11) auch eine Temperaturänderung des Gasstroms (43), welcher bei Austritt von Dampfüberschuss eine erhöhte Temperatur oder bei Lufteintritt von außen eine niedrigere Temperatur als die Garraumtemperatur aufweist, direkt registriert wird,
und mit der Sensoreinrichtung (31) der Garprozess in Abhängigkeit von dem Maß (33) für die Beladung gesteuert wird,
wobei die Dampfquelle (3) den erzeugten Dampf (9) über Dampfeinlassöffnungen (4 bis 7) in den Garraum (2) hinein leitet und über eine zentrale Dampfauslassöffnung (8), welche mit der Umgebung (50) des Gargerätes (1) verbunden ist, überschüssiger Dampf (9) aus dem Garraum (2) nach außen abgeführt wird oder Luft aus der Umgebung (50) angesaugt wird, wenn im Inneren des Garraums (2) ein Unterdruck vorherrscht, beispielsweise wenn dort vorhandener Dampf (9) kondensiert und nicht genug Dampf (9) durch die Dampfquelle (3) nachgeliefert wird,
wobei die Heizleistung der Dampfquelle (3) in Abhängigkeit von der charakteristischen Temperatur (12) gesteuert wird.

2. Verfahren nach einem der drei vorhergehenden Ansprüche,
**dadurch gekennzeichnet,**
**dass** eine Wärmekapazität (37) des aufgenommenen Gargutes (21) bestimmt wird.

3. Verfahren nach einem der vier vorhergehenden Ansprüche,
**dadurch gekennzeichnet,**
**dass** die Heizleistung (36) der Dampfquelle (3) in Abhängigkeit von dem Maß (33) für die Beladung gesteuert wird.

4. Verfahren nach einem der fünf vorhergehenden Ansprüche,
**dadurch gekennzeichnet,**
**dass** beim Aufheizen die Heizleistung (36) der Dampfquelle (3) bei einer geringeren Beladung (40) bei einer geringeren Temperatur (38) reduziert wird als bei einer größeren Beladung (41).

5. Gargerät (1) mit wenigstens einem Garraum (2), mit wenigstens einer Dampfquelle (3), mit wenigstens einer Steuereinrichtung (30) und mit wenigstens einer Sensoreinrichtung (31),
wobei die Sensoreinrichtung (31) wenigstens einen Temperaturfühler (11) umfasst, der eine für den Garraum (2) charakteristische Temperatur (12) erfasst wobei der Garraum (2) im Wesentlichen über wenigstens eine Dampfquelle (3) beheizbar ist, und die Steuereinrichtung (30) dazu eingerichtet ist, aus dem zeitlichen Temperaturverlauf (34) des Temperaturfühlers (11) das Maß (33) für die Beladung des Garraumes (2) abzuleiten,
wobei in dem Garraum (2) wenigstens eine Dampfeinlassöffnung (4-7) und wenigstens eine Dampfauslassöffnung (8) vorgesehen sind,
der wenigstens eine Temperaturfühler (11) in dem Bereich der Dampfauslassöffnung (8) und insbesondere an der Dampfauslassöffnung (8) angeordnet ist,
**dadurch gekennzeichnet, dass**
das Gargerät (1) eingerichtet ist das Verfahren nach einem der Ansprüche 1 bis 4 durchzuführen.

6. Gargerät (1) nach Anspruch 5,
**dadurch gekennzeichnet,**
**dass** die Steuereinrichtung (30) dazu eingerichtet ist, bei Erreichen einer Schwelltemperatur (35) eine Heizleistung (36) der Dampfquelle (3) zu reduzieren.

7. Gargerät (1) nach einem der Ansprüche 5 bis 6, **dadurch gekennzeichnet,**
**dass** wenigstens zwei getrennt steuerbare Dampfeinlassöffnungen (4, 5) vorgesehen sind.

## Claims

1. Method for operating a cooking appliance (1) comprising at least one cooking chamber (2), at least one steam source (3), at least one control device (30) and at least one sensor device (31), wherein the sensor device (31) has at least one temperature sensor (11) that detects a temperature (12) which is characteristic of the cooking chamber (2), wherein the cooking chamber (2) is heated substantially by means of a steam source (3) which is controlled by a control device (30), wherein the temperature sensor (11) is arranged within the cooking chamber (2) or outside the cooking chamber (2) and thus arranged downstream within the flow path (42) of the gas flow (43) through the steam outlet opening (8), wherein the measurement (33) of the load of the cooking chamber (2) is detected by means of the sensor device (31), by the measurement (33) of the load of the cooking chamber (2) being derived from the temporal temperature profile (34) of the temperature sensor (11), and a change in the temperature of the gas stream (43), which has a temperature higher than the cooking chamber when excess steam is let out or a temperature lower than the cooking chamber when air enters from the outside, is also registered directly by the temperature sensor (11), and the cooking process is controlled by means of the sensor device (31) on the basis of the measurement (33) of the load, wherein the steam source (3) lets the generated steam (9) into the cooking chamber (2) via steam inlet openings (4 to 7), and excess steam (9) is guided out of the cooking chamber (2) to the outside via a central steam outlet opening (8) which is connected to the surroundings (50) of the cooking appliance (1), or air is sucked in from the surroundings (50) when a negative pressure prevails in the interior of the cooking chamber (2), for example when steam (9) which is present in the chamber condenses and not enough steam (9) is replenished by the steam source (3), wherein the heat output of the steam source (3) is controlled on the basis of the characteristic temperature (12).

2. Method according to any of the preceding claims, **characterised in that** a heat capacity (37) of the received food (21) is determined.

3. Method according to any of the preceding claims, **characterised in that** the heat output (36) of the steam source (3) is controlled on the basis of the measurement (33) of the load.

4. Method according to any of the preceding claims, **characterised in that**, during the heating-up process, the heat output (36) of the steam source (3) is reduced to a lower temperature (38) in the case of a smaller load (40) than in the case of a larger load (41).

5. Cooking appliance (1) comprising at least one cooking chamber (2), at least one steam source (3), at least one control device (30) and at least one sensor device (31), the sensor device (31) having at least one temperature sensor (11) that detects a temperature (12) which is characteristic of the cooking chamber (2), it being possible for the cooking chamber (2) to be heated substantially by means of at least one steam source (3), and the control device (30) being designed to derive the measurement (33) of the load of the cooking chamber (2) from the temporal temperature curve (34) of the temperature sensor (11), at least one steam inlet opening (4-7) and at least one steam outlet opening (8) being provided in the cooking chamber (2), and the at least one temperature sensor (11) being arranged in the region of the steam outlet opening (8) and in particular on the steam outlet opening (8), **characterised in that** the cooking appliance (1) is designed for carrying out the method according to any of claims 1 to 4.

6. Cooking appliance (1) according to claim 5, **characterised in that** the control device (30) is designed to reduce a heat output (36) of the steam source (3) when a threshold temperature (35) is reached.

7. Cooking appliance (1) according to either claim 5 or claim 6, **characterised in that** at least two steam inlet openings (4, 5) are provided which can be controlled separately.

## Revendications

1. Procédé de fonctionnement d'un appareil de cuisson (1) comportant au moins une chambre de cuisson (2), au moins une source de vapeur (3), au moins un dispositif de commande (30) et au moins un dispositif de détection (31), le dispositif de détection (31) comprenant au moins un capteur de température (11) qui détecte une température caractéristique (12) de la chambre de cuisson (2),
la chambre de cuisson (2) étant chauffée essentiellement par une source de vapeur (3), laquelle est commandée par un dispositif de commande (30),
le capteur de température (11) étant disposé à l'intérieur ou à l'extérieur de la chambre de cuisson (2), et ainsi disposé en aval dans le trajet d'écoulement (42) du flux de gaz (43) à travers le trou de sortie de vapeur (8),
le niveau (33) de chargement de la chambre de cuisson (2) étant détecté par le dispositif de détection (31), le niveau (33) de chargement de la chambre de cuisson (2) étant déterminé à partir du profil de température temporel (34) du capteur de température (11), et une variation de température du flux de gaz (43), qui présente une température supérieure à celle de la chambre de cuisson lors de la sortie de l'excédent de vapeur et une température inférieure à celle de la chambre de cuisson lors de l'entrée d'air de l'extérieur, étant également enregistrée directement par le capteur de température (11),
le processus de cuisson étant commandé par le dispositif de détection (31) en fonction du niveau (33) de chargement,
la source de vapeur (3) amenant la vapeur (9) produite dans la chambre de cuisson (2) par l'intermédiaire des ouvertures d'entrée de vapeur (4 à 7) et par l'intermédiaire d'une ouverture de sortie de vapeur (8) centrale reliée à l'environnement (50) de l'appareil de cuisson (1), la vapeur (9) en excès étant évacuée de la chambre de cuisson (2) vers l'extérieur ou l'air provenant de l'environnement (50) étant aspiré lorsqu'une pression négative règne à l'intérieur de la chambre de cuisson (2), par exemple lorsque la vapeur (9) qui s'y trouve est condensée et qu'une quantité insuffisante de vapeur (9) est fournie par la source de vapeur (3),
la puissance calorifique de la source de vapeur (3) étant commandée en fonction de la température caractéristique (12).

2. Procédé selon l'une des trois revendications précédentes,
**caractérisé en ce**
**qu'**une capacité thermique (37) de l'aliment (21) introduit est déterminée.

3. Procédé selon l'une des quatre revendications précédentes,
**caractérisé en ce que**
la puissance calorifique (36) de la source de vapeur (3) est commandée en fonction du niveau (33) de chargement.

4. Procédé selon l'une des cinq revendications précédentes,
**caractérisé en ce que**,
lors du chauffage, la puissance calorifique (36) de la source de vapeur (3) en présence d'un chargement inférieur (40) et d'une température inférieure (38) est réduite par rapport à un chargement supérieur (41).

5. Appareil de cuisson (1) comportant au moins une chambre de cuisson (2), au moins une source de vapeur (3), au moins un dispositif de commande (30) et au moins un dispositif de détection (31),
le dispositif de détection (31) comprenant au moins un capteur de température (11) qui détecte une température caractéristique (12) de la chambre de cuisson (2),
la chambre de cuisson (2) pouvant être chauffée essentiellement par au moins une source de vapeur (3), et le dispositif de commande (30) étant conçu pour déterminer le niveau (33) de chargement de la chambre de cuisson (2) à partir du profil de température temporel (34) du capteur de température (11),
au moins une ouverture d'entrée de vapeur (4 à 7) et au moins une ouverture de sortie de vapeur (8) étant prévues dans la chambre de cuisson (2),
l'au moins un capteur de température (11) étant disposé dans la zone de l'ouverture de sortie de vapeur (8), et en particulier sur l'ouverture de sortie de vapeur (8),
**caractérisé en ce que**
l'appareil de cuisson (1) est conçu pour mettre en oeuvre le procédé selon l'une des revendications 1 à 4.

6. Appareil de cuisson (1) selon la revendication 5,
**caractérisé en ce que**
le dispositif de commande (30) est conçu pour réduire une puissance calorifique (36) de la source de vapeur (3) lorsqu'une température de seuil (35) est atteinte.

7. Appareil de cuisson (1) selon l'une des revendications 5 à 6,
**caractérisé en ce**
**qu'**au moins deux ouvertures d'entrée de vapeur (4, 5) pouvant être commandées séparément sont prévues.
